# EUROPEAN PATENT APPLICATION

(11) **EP 1 947 300 A1**
(43) Date of publication of application: **23.07.2008**
(21) Application number: 06804905.5
(22) Date of filing: 10.10.2006
(51) Int. Cl.: F01L 9/04, F15B 13/04

(54) **PERMANENT MAGNET ELECTRIC VALVE AND CONTROL SYSTEM THEREOF**

(30) Priority: 10.10.2005 CN 200510113060
(71) Applicant: He, Lei, Lanzhou City 730010, P.R. (CN)
(72) Inventor: He, Lei, Lanzhou City 730010, P.R. (CN)
(74) Representative: Sieckmann, Dirk Christoph
(86) International application number: PCT/CN2006/002648
(87) International publication number: WO 2007/041949

(57) **Abstract**

A permanent magnet electric valve and a control system thereof are provided, the permanent magnet electric valve includes a case (1), an upper fixed core (9) and a winding thereof, a lower fixed core (8) and a winding thereof, a valve body (7), a permanent-magnet movement block (3) and a linear bearing (6). The permanent magnet movement block (3) is fixed to the valve body (7) between the two cores. Attraction force and repulsion force are produced by the magnetic forces between the permanent-magnet movement block (3) and the two cores and their windings to make the permanent-magnet movement block (3) and the valve body (7) to move up and down between the two cores. The control system consists of the winding for the valve, a signal detecting module (21), a signal processing module (22) and one way bridge variable current driving circuit (Q); the signal processing module (22) receives and deals with the signal detected by the signal detecting module (21) and generates the pulse triggering driving signal, so as to control in turn the one way bridge variable current driving circuit to alternately switch the current for the intake valve and exhaust valve per cylinder in gas distribution apparatus in engine.

## Description

### TECHNICAL FIELD

This invention relates to a gas distribution apparatus for engine, more specifically, it relates to a permanent magnet electric valve and a control system thereof for use in a gas distribution apparatus for engine.

### BACKGROUND ART

The gas distribution mechanisms adopted by prior art engines are all made up of valve, valve spring, valve guide, valve guide oil seal, rocker arm, valve clearance regulator, rocker arm shaft, camshaft, locking piece, spring, variable valve mechanism and the like; the actuating systems of gas distribution mechanisms are constituted and actuated by engine crankshaft timing belt pulley (or chain gear), timing belt or chain, pinch roller, and camshaft pulley or camshaft gear; valves are opened and closed via the actuating system of gas distribution mechanism. The actuating mechanisms of prior art engine valves feature numerous parts and components as well as complicated construction, in addition, such mechanically gas distribution mechanism and actuating system do not allow the change and regulation of valve lift, valve open angle and valve close angle, thus the efficacy of engine is influenced directly. Moreover, valve guide oil seal is prone to wearout and aging, engine oil may thus enter combustion chamber from between valve and valve guide, the combustion of the engine oil may bring about blue smoke and produce carbon deposit, and finally make engine easily worn out and cause serious pollution.

To solve the problems above, the present inventor has applied on December 6, 2004 a patent named "Electromagnetic valve and the control system" in China (Application No.: 200410100922.6), wherein the electromagnetic valve utilizes the principle of attraction between two electromagnetic coils and core or between permanent magnet steel/electromagnetic coil and core and controls in turn the energization and deenergization of electromagnetic coil by electronic switch. More specifically, the said electromagnetic valve comprises a case, a winding, a permanent magnet steel or a fixed core, a valve, a linear bearing, and a slidable core, the permanent magnet steel or fixed core is fixed to the case, the valve and the slidable core are rigidly connected together, the slidable core and the permanent magnet steel or fixed core are arranged in facing relation, the case is wound with slidable core winding or slidable core and fixed core winding, the valve is in slip connection with the linear bearing, the linear bearing and the case are fixed to the engine cylinder cover; the control system alternately switches the current for the intake valve and exhaust valve per cylinder through a signal device, a sensor, a signal acquisition and processing unit, a computer, a driving circuit, and a metal oxide semiconductor field effect transmitter (MOSFET) or a high-power triode. This electromagnetic valve and the control system feature simple construction, sensitive control, superior performance, and extremely high reliability, in addition, the valve clearance needs no regulation, the engine noise is reduced, and the operational reliability and efficiency of the engine are largely improved.

However, with the increasingly higher demand on the valve switching frequency of engine's gas distribution apparatus, how to further improve the above electromagnetic valve and its control system and thus to improve the switching speed of the valve has become an important problem in urgent need to be solved,

### SUMMARY OF THE INVENTION

The aim of this invention is to provide a permanent magnet electric valve and a control system thereof with simple construction, sensitive control and more quicker switching.

To realize the above purpose, the technical scheme adopted in this invention is a permanent magnet electric valve comprising a case; a valve body situated at the central position inside the case; an upper fixed core fixed to the upper end inside the case, wound with a first winding thereon, and the lower end thereof arranged in facing relation with the upper end of the electric valve; a lower fixed core wound with a second winding thereon, situated certain distance away from the upper fixed core, and fixed to the lower end inside the case surrounding the valve body; and a permanent-magnet movement block fixed to the valve body between the lower fixed core and the upper fixed core; wherein attraction force and repulsion force are produced by the magnetic forces generated by the current in the first winding and the second winding as well as generated by the permanent-magnet movement block to make the permanent-magnet movement block and the valve body move up and down between the lower fixed core and the upper fixed core.

Preferably the said permanent-magnet movement block contains a permanent magnet steel and a fixator used to fix the permanent magnet steel to the valve body.

Preferably the said first winding and the said second winding are in series connection or parallel connection, and the on-state current in the first winding and the second winding is positive and negative-polarity alternating current.

Preferably at the lower end face of the said upper fixed core in facing relation with the permanent-magnet movement block is rigidly arranged with a buffer device, and at the upper end face of the said lower fixed core in facing relation with the permanent-magnet movement block is arranged with a buffer device.

Preferably the said buffer device is a buffer spring or a buffer block.

Preferably the said permanent magnet electric valve further comprises a linear bearing, and the said linear bearing is in slip connection with the valve body.

This invention further provides a control system for permanent magnet electric valve to control the winding of the above-mentioned permanent magnet electric valve, which comprises: a signal detecting module, a signal processing module and a one way bridge variable current driving circuit; the signal detecting module comprises a signal generating unit arranged at the crankshaft end of the engine and a sensor connecting with the said signal generating unit, wherein the sensor is used to acquire the upper stop point and lower stop point of the piston as well as the phase position signal of the motor; the signal processing module connects with the said signal detecting module and is used to receive and deal with the signal detected by the said signal detecting module and generate pulse triggering driving signal; the one way bridge variable current driving circuit connects separately with the said signal processing module and the winding of the permanent magnet electric valve and is used to alternately switch the current in the winding for the intake valve and exhaust valve per cylinder according to the pulse triggering driving signal generated by the signal processing module.

Preferably the said one way bridge variable current driving circuit is composed of a DC battery pack and four power devices that constitute a one way bridge variable current driving circuit.

Preferably the said four power devices are high-power triodes or semiconductor field effect transmitters (MOSFET).

It can be seen from the above technical scheme that the permanent magnet electric valve and the control system thereof according to this invention utilize the organic combination of the principles of electromagnetic induction, magnetics and linear motor, employ an electronic switch to alternately switch the current so as to control the electromagnetic core winding, in this way, attraction force or repulsion force is produced between the induction field generated by the core and the permanent magnet of the permanent-magnet movement block, thus the quick switching of automobile engine valve is realized. This invention features simple construction, sensitive control, quick switching, superior performance and high reliability.

### BRIEF DESCRIPTION OF DRAWINGS

Figure 1 is the structural diagram of a permanent magnet electric valve according to an embodiment of this invention in close state;
Figure 2 is the structural diagram of a permanent magnet electric valve according to an embodiment of this invention in open state;
Figure 3 is the functional block diagram of a permanent magnet electric valve according to a first embodiment of this invention;
Figure 4 is the functional block diagram of a permanent magnet electric valve according to a second embodiment of this invention.

### DETAILED DESCRIPTION OF THE PREFERRED EMBODIMENT

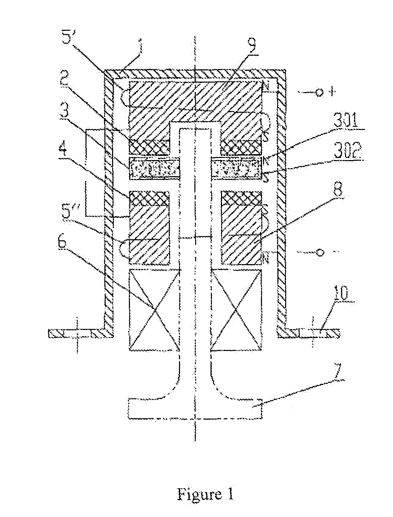

Now refer to Figure 1, which is a diagram showing the construction of a permanent magnet electric valve according to an embodiment of this invention in close state. As illustrated in the figure, a permanent magnet electric valve according to this invention comprises a case 1, a valve body 7 situated at the central position inside the case 1, an upper buffer block 2, a permanent-magnet movement block 3, a lower buffer block 4, a linear rolling bearing 6, an upper fixed core 9 wound with a first winding 5', and a lower fixed core 8 wound with a second winding 5".

The upper fixed core 9 is fixed to the upper end inside the case 1, and its lower end is arranged in facing relation with the upper end of the valve body 7; the lower fixed core 8 is situated certain distance away from the upper fixed core 9, and is fixed to the lower end inside the case 1 surrounding the valve body 7; the permanent-magnet movement block 3 is installed on the valve body 7 between the upper fixed core 9 and the lower fixed core 8, and is arranged in facing relation with the upper and lower fixed cores 8 and 9. To enhance the strength of the permanent-magnet movement block 3 and the firm binding with the valve body 7, the permanent-magnet movement block 3 contains a permanent magnet steel 301 and a fixator 302 used to fix the permanent magnet steel 301 to the valve body 7. To enhance the shock strength of the permanent-magnet movement block 3, an upper buffer block 2 and a lower buffer block 4 are arranged separately on the upper and lower faces of the permanent-magnet movement block 3, with the upper buffer block 2 fixed to the lower end face of the upper fixed core 9 and the lower buffer block 4 fixed to the upper end face of the lower fixed core 8. The rod portion of the valve body 7 is fit over a linear rolling bearing 6 which is in slip connection with the valve body 7; the case 1 is fixed to the engine cylinder cover through bolt hole 10, and the linear rolling bearing 6 and the engine cylinder cover can be fixed in close fit manner.

The first winding 5' and the second winding 5" are in parallel or series connection, and the on-state current in the first winding 5' and the second winding 5" is positive and negative alternating current. In this embodiment, the first winding 5' and the second winding 5" are in series connection.

Continue to Figure 1, when the first winding 5' and the second winding 5" of the upper and lower fixed cores 9 and 8 are passed through positive current, magnetic pole opposite to the polarity of the permanent-magnet movement block 3 will be produced at the core end face on the upper fixed core 9 adjacent to the permanent-magnet movement block 3, while magnetic pole same as the polarity of the permanent-magnet movement block 3 will be produced at the core end face on the lower fixed core 8 adjacent to the permanent-magnet movement block 3, thus attraction force is produced between the upper fixed core 9 and the permanent-magnet movement block 3 due to opposite magnetic poles, and at the same time, repulsion force is produced between the lower fixed core 8 and the permanent-magnet moving block 3 due to same magnetic poles, accordingly, under the repulsion force from the lower fixed core 8 and the attraction force from the upper fixed core 9, the permanent-magnet movement block 3 will rapidly move up and close the valve.

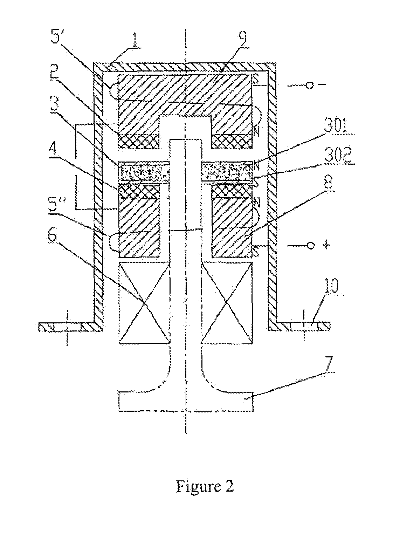

Now refer to Figure 2, which is a diagram showing the construction of a permanent magnet electric valve according to an embodiment of this invention in open state. When the first winding 5' and the second winding 5" of the upper and lower fixed cores 9 and 8 are passed through negative current, magnetic pole same as the polarity of the permanent-magnet movement block 3 will be produced at the core end face on the upper fixed core 9 adjacent to the permanent-magnet movement block 3, while magnetic pole opposite to the polarity of the permanent-magnet movement block 3 will be produced at the core end face on the lower fixed core 8 adjacent to the permanent-magnet movement block 3, thus repulsion force is produced between the upper fixed core 9 and the permanent-magnet movement block 3 due to same magnetic poles, and at the same time, attraction force is produced between the lower fixed core 8 and the permanent-magnet moving block 3 due to opposite magnetic poles, accordingly, under the attraction force from the lower fixed core 8 and the repulsion force from the upper fixed core 9, the permanent-magnet movement block 3 will rapidly move down and open the valve. After momentary close or open, the current for the windings 5' and 5" of the upper and lower fixed cores 9 and 8 is cut off, then under the attraction force between the permanent magnet and the core, the upper fixed core 9 and the permanent-magnet movement block 3 would continue to allow the close of the valve, and the valve keeps at normal close state; on the other hand, under the attraction force between the permanent magnet and the core, the lower fixed core 8 and the permanent-magnet movement block 3 would continue to allow the open of the valve, and the valve keeps at normal open state.

In the embodiment illustrated in Figure 1 and Figure 2, the positions of the upper fixed core 9 and the lower fixed core 8 are only in relative sense, and should not be construed as to exclude their left and right arrangement or position interchange. Any of such equivalent changes and variations are within the scope of this invention.

In practical use, a single-valve engine adopts one permanent magnet electric valve mentioned above, while a multi-valve engine adopts several permanent magnet electric valves mentioned above, alternatively, several groups of permanent magnet electric valve may be constituted into an integrated permanent magnet electric valve group, which can be connected in parallel with the control system.

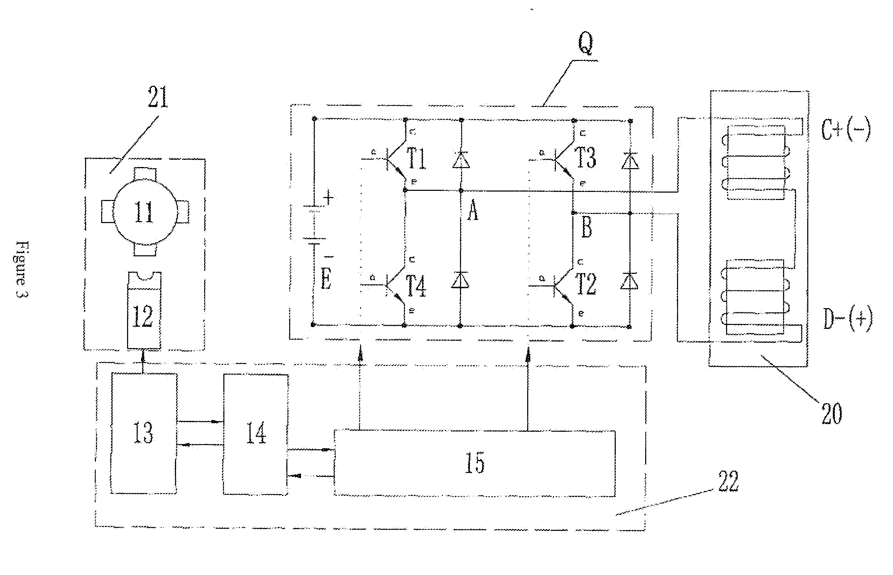

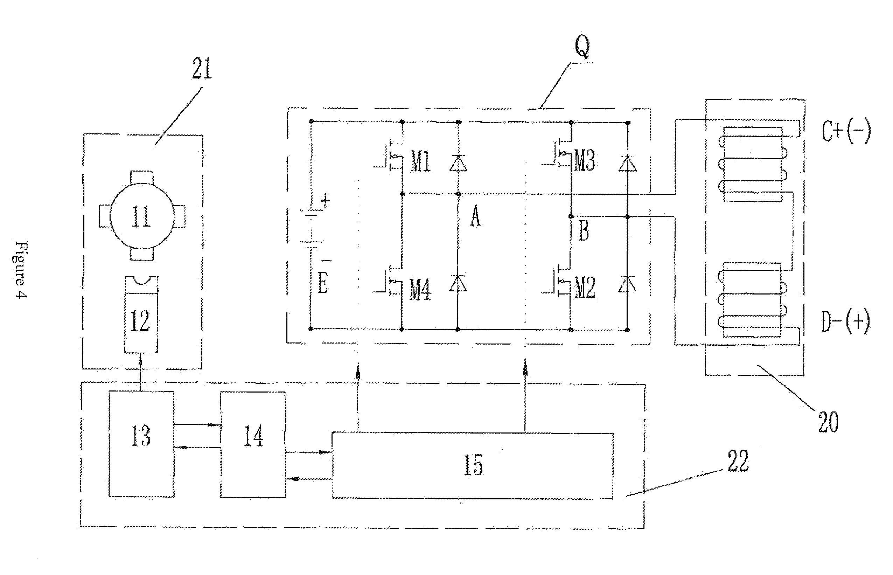

Now turn to Figure 3 and Figure 4, both of which are functional block diagram of a permanent magnet electric valve according to an embodiment of this invention. Figure 3 and 4 are different in that the power devices used in the one way bridge variable current driving circuits are different: in Figure 3, high-power triodes T1, T2, T3 and T4 are used, while in Figure 4, MOSFET transistors M1, M2, M3 and M4 are used. Here below, Figure 3 will be described as an example.

As shown in Figure 3, the control system of the permanent magnet electric valve is made up of a signal detecting module 21, a signal processing module 22 and a one way bridge variable current driving circuit Q; the signal detecting module 21 is used to acquire the upper stop point and lower stop point of the piston as well as the phase position signal of the motor; the signal processing module 22 connects with the said signal detecting module 21 and is used to receive and deal with the signal detected by the said signal detecting module 21 and generate pulse triggering driving signal; the one way bridge variable current driving circuit Q connects separately with the said signal processing module 22 and the winding 20 of the permanent magnet electric valve and is used to alternately switch the current in the winding 20 for the intake valve and exhaust valve per cylinder according to the pulse triggering driving signal generated by the signal processing module 22.

The said signal detecting module 21 comprises a signal generating unit 11 and a sensor 12 connecting with the said signal generating unit 11, wherein the sensor 12 is used to acquire the upper stop point and lower stop point of the piston as well as the phase position signal of the motor. The signal processing module 22 comprises a signal acquisition and processing unit 13, a computer 14, and a driving circuit 15. The signal acquisition and processing unit 13 transmits the upper stop point and lower stop point of the piston as well as the engine speed signal acquired by the sensor 12 to the computer 14, then computer 14 controls the driving circuit 15 to actuate the variable current driving circuit Q. The said one way bridge variable current driving circuit Q is composed of a battery pack E and four high-power triodes T1, T2, T3 and T4 that constitute a one way bridge variable current driving circuit. The battery pack E provides DC power supply for the variable current driving circuit Q. The output terminals A and B of the high-power triodes T1, T2, T3 and T4 are connected with the terminals C and D of the winding 20 respectively.

When an engine is started up, the engine crankshaft would drive the signal generating unit 11 to rotate, the sensor 12 may at the same time detect the firing, the upper stop point and lower stop point of the piston as well as the phase position of the motor, and transmit the position signal to the signal acquisition and processing unit 13, the signal acquisition and processing unit 13 and the computer 14 would go through a computation process based on the piston position signal, the engine speed, the load, the temperature and other information, and then command the operation of the driving circuit 15, thus controlling the one way bridge variable current driving circuit Q to alternately positively or negatively turning on the current so as to control the switching of the intake valve and exhaust valve per cylinder according to the engine operation and firing sequence as well as the open and close schedule of the intake valve and exhaust valve per cylinder,

Specifically, when the sensor 12 detects that the valve between the upper and lower stop point of the piston is at open position, the control system would control the intake valve winding 20 of the current cylinder to be turned on negatively, that is, the control circuit 15 would trigger the high-power triodes T1 and T2 to deactivate while trigger the high-power triodes T3 and T4 to lead, i.e., current would pass forward through the collector electrode (c electrode) and emitter electrode (e electrode) of the high-power triode T3, and enter the D and C terminals of the winding 20 from the output terminal F3, at this time, the high-power triodes T1 and T2 are kept off; accordingly, under the repulsion force from the upper fixed core 9 due to same polarity magnetic pole and the attraction force from the lower fixed core due to opposite polarity magnetic pole, the permanent-magnet movement block 3 and the valve body 7 would move down quickly and open the valve.

When the sensor 12 detects that the valve between the upper and lower stop point of the piston is at close position, the control system would control the intake valve winding 20 of the current cylinder to be turned on positively, that is, the control circuit 15 would trigger the high-power triodes T1 and T2 to lead, current would flow out from the positive pole of battery, pass through the collector electrode (c electrode) and emitter electrode (e electrode) of the high-power triode T1, enter the C and D terminals of the winding 20 from the output terminal A, and then is output from the c electrode and e electrode of the high-power triode T2 and finally return to the negative pole of battery. At this time, the high-power triodes T3 and T4 are kept off; accordingly, under the attraction force from the upper fixed core 9 due to opposite polarity magnetic pole and the repulsion force from the lower fixed core 8 due to same polarity magnetic pole, the permanent-magnet movement block 3 and the valve body 7 would move up quickly and close the valve.

By analogy, the intake valve and exhaust valve per cylinder of the engine would alternately open and close recurrently according to the open and close schedule of the intake valve and exhaust valve per cylinder required by the operation sequence. The advance angle for the open of the intake valve and the lag angle for the close of the exhaust valve are automatically varied and regulated by the computer 14 after computation based on the acquired piston position signal, the engine speed, the load, the temperature and other information.

### INDUSTRIAL PRACTICABILITY

This invention relates to a permanent magnet electric valve and a control system thereof for use in gas distribution apparatus of engine, wherein the said permanent magnet electric valve and the control system thereof utilize the organic combination of the principles of electromagnetic induction, magnetics and linear motor, employ an electronic switch to alternately switch the current so as to control the electromagnetic core winding, in this way, attraction force or repulsion force is produced between the induction field generated by the core and the permanent magnet of the permanent-magnet movement block, thus the engine valve can have a simple construction, sensitive control, quick switching and high reliability, besides, the open extent of the valve is controllable. This invention is particularly suitable for the electronic and automatic oriented development of modem automobile engine.

## Claims

1. A permanent magnet electric valve comprising:
a case (1),
a valve body (7) situated at the central position inside the case (1);
which is **characterized in that** it further comprises:
an upper fixed core (9) fixed to the upper end inside the case (1), wound with a first winding (5') thereon, and the lower end thereof arranged in facing relation with the upper end of the valve body (7);
a lower fixed core (8) wound with a second winding (5") thereon, situated certain distance away from the upper fixed core (9), and fixed to the lower end inside the case (1); and
a permanent-magnet movement block (3) fixed to the valve body (7) between the lower fixed core (8) and the upper fixed core (9);
wherein, attraction force and repulsion force are produced by the magnetic forces generated by the current in the first winding (5') and the second winding (5") as well as generated by the permanent-magnet movement block (3) to make the permanent-magnet movement block (3) and the valve body (7) move up and down between the lower fixed core (8) and the upper fixed core (9).

2. The permanent magnet electric valve according to claim 1, which is **characterized in that** the said permanent-magnet movement block (3) contains a permanent magnet steel (301) and a fixator (302) used to fix the permanent magnet steel (301) to the valve body (7).

3. The permanent magnet electric valve according to claim 1, which is **characterized in that** the said first winding (5') and the said second winding (5") are in series connection or parallel connection, and the on-state current in the first winding (5') and the second winding (5") is positive and negative-polarity alternating current.

4. The permanent magnet electric valve according to claim 1, which is **characterized in that** at the lower end face of the said upper fixed core (9) in facing relation with the permanent-magnet movement block (3) is rigidly arranged with a buffer device (2), and at the upper end face of the said lower fixed core (8) in facing relation with the permanent-magnet movement block (3) is arranged with a buffer device (4).

5. The permanent magnet electric valve according to claim 1, which is **characterized in that** the said buffer device (2, 4) is a buffer spring or a buffer block.

6. The permanent magnet electric valve according to claim 1, which is **characterized in that** it further comprises a linear bearing (6), and the said linear bearing (6) is in slip connection with the valve body (7).

7. A control system for permanent magnet electric valve to control the winding (20) of the permanent magnet electric valve according to claims 1-6, which is **characterized in that** it comprises:
a signal detecting module (21), which comprises:
a signal generating unit (11) arranged at the crankshaft end of the engine; and
a sensor (12) connecting with the said signal generating unit (11) and used to acquire the upper stop point and lower stop point of the piston as well as the phase position signal of the motor;
a signal processing module (22), which connects with the said signal detecting module (21) and is used to receive and deal with the signal detected by the said signal detecting module (21) and generate pulse triggering driving signal;
a one way bridge variable current driving circuit (Q), which connects separately with the said signal processing module (22) and the winding (20) of the permanent magnet electric valve and is used to alternately switch the current in the winding (20) for the intake valve and exhaust valve per cylinder according to the pulse triggering driving signal generated by the signal processing module (20).

8. The control system for permanent magnet electric valve according to claim 7, which is **characterized in that** the said one way bridge variable current driving circuit (Q) is composed of a DC battery pack (E) and four power devices that constitute a one way bridge variable current driving circuit.

9. The control system for permanent magnet electric valve according to claim 7, which is **characterized in that** the said four power devices are high-power triodes (T1, T2, T3, T4) or semiconductor field effect transmitters (M1, M2, M3, M4).
